# EUROPEAN PATENT APPLICATION

(11) **EP 1 052 455 A1**
(43) Date of publication of application: **15.11.2000**
(21) Application number: 00109761.7
(22) Date of filing: 09.05.2000
(51) Int. Cl.: F23J 15/02

(54) **Filter for the elimination of particulate in exhaust fumes**

(30) Priority: 12.05.1999 IT GE990050
(71) Applicant: MORELLO FORNI S.a.S., 16159 Genova (IT)
(72) Inventor: Morello, Mairo, 16159 Genova (IT)
(74) Representative: Porsia, Attilio, Dr.

(57) **Abstract**

Filter to hold up the particulates in combustion fumes, preferably of solid fuel furnaces, consisting of a tank (1) filled up to a given level with a liquid (10), preferably water or an aqueous solution, provided with a fumes intake manifold (2) and with an exhaust manifold (3) for treated fumes, said tank being equipped with means (621, 631, 106) for the dispersion of the liquid in the fumes coming from said intake manifold (2), with suction means (601, 611, 106) for the dispersion thus obtained, and with means (701) for the separation of the dispersion from the fumes flow, said intake manifold (2) being placed directly above the maximum level said liquid can reach.

## Description

The present invention relates to filters to hold up the particulates, preferably for furnaces using solid fuels such as wood, charcoal or like.

The combustion taking place in furnaces using wood, charcoal or other similar materials usually produces a great amount of particulate, typically soot, with a relevant environmental impact. It is necessary to limit drastically the presence of particulate in order to reduce the inconveniences caused by said fumes, especially in those situations in which said emissions take place in highly-populated areas.

This kind of problem is now rather common in our cities because of the presence of many shops such as pizza-shops, restaurants and similar which make use of said ovens, having relevant overall dimensions and working also for extremely long periods.

From the technology applied to other fields it is known about filtration systems for furnaces emissions, said systems though generally showing a building complexity and installation and operation costs which exclude them from users operating in this field.

The present invention aims at providing a filter to hold up the particulates, which is extremely easy to carry out and to operate, ensuring nevertheless a high performance as far as emission filtration is concerned.

The object of the present invention, therefore, is a filter to hold up the particulates in combustion fumes, preferably of solid fuel furnaces, characterized in that said filter consists of a tank filled up to a given level with a liquid, preferably water or an aqueous solution, provided with a fume intake manifold and with an exhaust manifold for treated fumes, said tank being equipped with means for the dispersion of the liquid in the fumes coming from said intake manifold, suction means for the thus obtained dispersion and means for the separation of the dispersion from the fumes flow, said intake manifold being placed directly above the maximum level the liquid can reach.

In a form of embodiment said dispersion means consist of means for the stirring of the liquid and means for the splitting up of said liquid into tiny drops. The stirring means can comprise a fan which moves the liquid surface, whereas the splitting means can comprise a plurality of pierced plates, arranged so as to be at least partially flooded by said liquid, and preferably perpendicular to its surface.

The dispersion suction means can also consist of a fan provided with driving means, and preferably a centrifugal fan, coupled with a pipe with an intake mouth at least partially flooded by said liquid, whose side walls are advantageously pierced.

The means for the separation of the dispersion from the fumes flow comprise a bell placed above said fan.

Further advantages and characteristics will be evident from the following description of a form of embodiment of the present invention, carried out as a mere non-limiting example, with reference to the enclosed drawings, in which:
Figure 1 is a lateral elevation view of the filter according to the present invention;
Figure 2 is a cross-section view following line II-II of Figure 1; and
Figure 3 is a section view following line III-III of Figure 2.

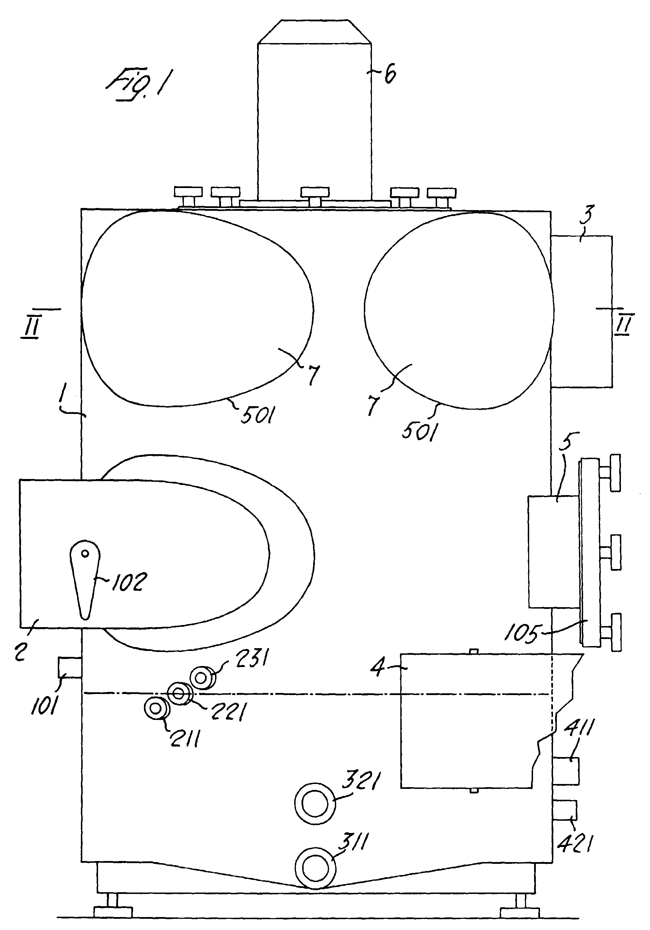

Fig. 1 shows a filter according to a form of embodiment of the present invention; the numeral 1 indicates the tank of said filter. Said tank 1 is provided with a fume intake manifold 2, which can be connected to the furnace exhaust; the manifold 2 is provided with a regulation handgrip 102 controlling a valve (not shown in the figure). The pipe 101, located on the side wall of the tank 1, allows the introduction of the liquid, whose optimal level is indicated by the dashed line 11. Moreover, the side wall shows the three taps 211, 221, 231 for the detectors of the liquid level in the tank 1 and the housings 411 and 421 for the probes measuring respectively temperature and pH values. Near the bottom end of said tank two exhaust hubs 321 and 311 are arranged, the latter being placed in the deepest portion of the wall 331, with a section substantially shaped like a truncated cone.

On the opposite end of the tank 1, the latter is connected to a motor reducer 6, placed with its axis parallel to the longitudinal axis of the tank. The exhaust manifold 3 is located near said end and radially with respect to the side wall. The holes 501, where the plates 7 are arranges, are placed on the side wall, at the same height as the exhaust manifold. Moreover, said side wall shows the inspection window 5, provided with the hatch 105, substantially at the same height as the intake manifold 2. Also the panel 4 is attached to said wall, on said wall being placed the control means for the operation of the filter.

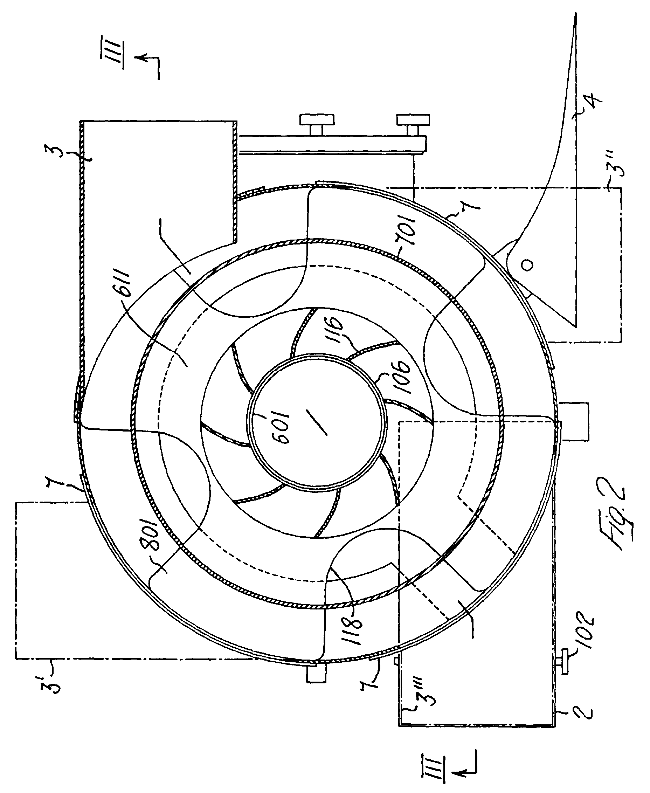

Figure 2 shows the form of embodiment of figure 1 in a section view following line II-II; the same parts are indicated by the same numerals. The figure shows the fan 106, provided with the blades 116, said fan being operated by the motor 6 shown in figure 1, rotating with respect to the pipe 601 which is coaxial and concentric with respect to said fan. A bell 701 is interposed between the side wall of the tank 1 and the fan 106. Directly below the bell a septum 801 is placed, showing the openings 811. On the opposite end of the pipe 601 with respect to the end communicating with the fan 106, the intake mouth 611 is located. The other possible positions of the exhaust manifold 3 are shown in the figure with a dotted line and indicated respectively with 3', 3'' and 3'''.

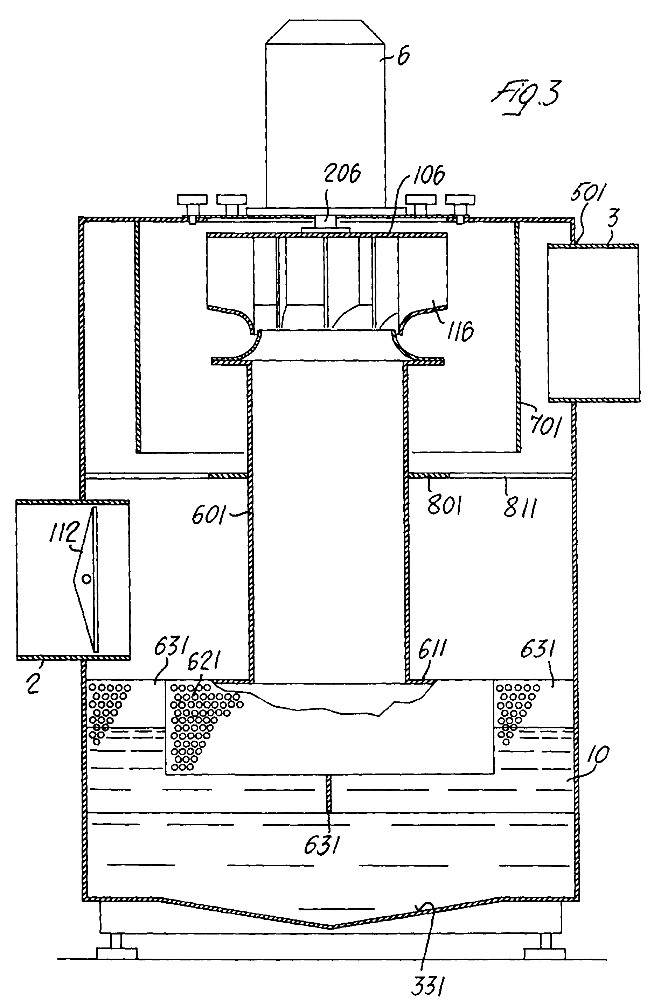

Figure 3 shows a section of the filter according to the invention following line III-III of figure 2; the same parts are indicated by the same numerals. As can be observed in the figure, the portion of the tank 1 near the bottom wall 331 is filled up with the liquid 10, typically water or an aqueous solution; the pierced plates 631, one perpendicular to the other, are placed on the whole width of the tank 1, at least partially flooded by the liquid 10. On said plates the mouth 611 of the intake pipe 601 is placed, whose side wall 621 is pierced, too; also the mouth 61 is partially flooded by the liquid 10. Moreover, the figure shows the valve 112, which is controlled by the handgrip 102 shown in figure 1.

The working of the filter according to the present invention will be evident from the following description. As can be seen from the figures 1 and 3, the liquid 10 is introduced into the tank 1 through the pipe 101. The liquid can be water or an aqueous solution suitably chosen to this purpose. The liquid level is usually between 25 and 30% of the total volume of the tank 1. Said level is kept under control by means of detectors introduced into the taps 211, 221 and 231, indicating respectively the minimum level, the optimal maximum level and the alarm upper level.

The fan 106 is operated by the motor reducer 6 and its operation moves the liquid surface 10, so that said surface gets into touch with the plates 631 and with the wall 621 of the intake mouth 611, thus generating a sort of aqueous dust. Said dust scatters in the fumes flow entering the tank 1 through the manifold 2, said flow being regulated by means of the valve 112. The position of the blades 116 of the fan 106 indicates that said fan works as a centrifugal fan when it is operated counterclockwise. The dispersion thus obtained is then taken through the mouth 611 into the pipe 601, and from here, thanks to the centrifugal action of the fan 106, the heaviest fraction of the dispersion is thrown against the side wall of the bell 701. Said fraction comprises the water drops generated near the intake mouth 611, which englobed the particulate present in the fumes that have entered the tank 1 through the manifold 2. After the collision with the bell 701 the liquid drops including the fume particulate fall into the liquid 10, where, during the rest stages of the filter, they will sediment on the bottom 331 of said tank 1.

Through the hatches 311 and 321 the liquid will be periodically drawn off, so as to eliminate deposits and to keep filter efficiency at its maximum levels. The probes placed in the portion of the tank 1 containing the liquid, in the housings 411 and 421, allow the monitoring of the situation as far as temperature and pH changes are concerned, so as to prevent the reaching of critical filter efficiency conditions. The instruments connected to the probes and the lights connected to the level detectors can be arranged on the panel 4.

Between the upper portion of the tank 1, where the fan 106 is placed, and the portion below the bell 701 a septum 801 is located, said septum being provided with a series of openings 811. The function of said septum 801 is to direct a given percentage of the fumes, which have already been deprived of their bigger particulates, towards the exhaust manifold, thus preventing that said fumes are taken in again through the mouth 601. Advantageously, it is possible to vary the width of the openings 811, said width appearing in this case to be fixed, so as to control the fumes fraction destined directly to the exhaust and the fraction which has to be re-introduced into the filtering cycle, the latter obviously because of the greater amount of particulate.

If necessary, as can be seen from figures 1 and 2, the exhaust manifold for the filtered fumes can be mounted in four different positions, that is to say, 3, 3', 3'', 3''', according to the position of the filter in its housing structure.

The filter thus conceived therefore fulfils its task, that is to say the filtration of fumes coming from solid fuel furnaces, and in particular the elimination of soot and other particulates with high efficiency, and shows at the same time a building, functional and maintenance easiness which make it extremely suitable for the use on a large scale.

## Claims

1. Filter to hold up particulates in combustion fumes, preferably of solid fuel furnaces, characterized in that said filter consists of a tank (1) filled up to a given level with a liquid (10), preferably water or an aqueous solution, provided with a fumes intake manifold (2) and with an exhaust manifold (3) for treated fumes, said tank being equipped with means (621, 631, 106) for the dispersion of the liquid in the fumes coming from said intake manifold (2), with suction means (601, 611, 106) for the dispersion thus obtained, and with means (701) for the separation of the dispersion from the fumes flow, said intake manifold (2) being placed directly above the maximum level said liquid can reach.

2. Filter according to claim 1, in which said dispersion means comprise stirring means (106) for the liquid and means (631, 621) for the splitting up of said liquid into tiny particles.

3. Filter according to claim 2, in which said stirring means comprise a fan (106) provided with driving means (6), which can move the liquid surface.

4. Filter according to claim 2, in which said splitting means can comprise a plurality of pierced plates (631), arranged so as to be at least partially flooded by said liquid (10), and substantially perpendicular to its surface.

5. Filter according to any of the preceding claims 1 to 4, in which said dispersion suction means consist of a fan (106), provided with driving means (6), placed in said tank (1) on the opposite end with respect to the end containing the liquid (10), and coupled with a pipe (601) with an intake mouth (611) at least partially flooded by said liquid (10).

6. Filter according to claim 5, in which said fan is preferably a centrifugal fan (106, 6).

7. Filter according to claim 5, in which the side wall of said intake mouth is pierced.

8. Filter according to any of the preceding claims 1 to 7, in which said means for the separation of the dispersion from the fumes flow comprise a bell (701) placed above said fan (106).

9. Filter according to any of the preceding claims 1 to 8, in which said exhaust manifold (3) is placed near the end where said fan (106) is located.

10. Filter according to claims 8 and 9, in which downstream from said bell (701) a septum (801) provided with a plurality of openings (811) is placed in a transversal position with respect to said tank (1).
